# EUROPÄISCHE PATENTSCHRIFT

(11) **EP 1 466 022 B1**
(45) Veröffentlichungstag und Bekanntmachung des Hinweises auf die Patenterteilung: **14.05.2014**
(21) Anmeldenummer: 03702425.4
(22) Anmeldetag: 13.01.2003
(51) Int. Cl.: C21C 5/46, C21C 5/52, F27B 3/22, F27D 3/16, F27D 3/18, F27D 99/00

(54) **VERFAHREN ZUR PYROMETALLURGISCHEN BEHANDLUNG VON METALLEN, METALLSCHMELZEN UND/ODER SCHLACKEN SOWIE EINE INJEKTORVORRICHTUNG**
METHOD FOR THE PYROMETALLURGICAL TREATMENT OF METALS, METAL MELTS AND/OR SLAGS AND INJECTION DEVICE
PROCEDE POUR LE TRAITEMENT PYROMETALLURGIQUE DE METAUX, DE BAINS DE FUSION ET/OU DE SCORIES ET DISPOSITIF D'INJECTION

(30) Priorität: 15.01.2002 DE 10201108
(43) Veröffentlichungstag der Anmeldung: 13.10.2004
(73) Patentinhaber: SMS Siemag AG, 40237 Düsseldorf (DE)
(72) Erfinder: MEYN, Matthias, 40721 Hilden (DE); MONHEIM, Peter, 46284 Dorsten (DE); SCHOLZ, Reinhard, 38678 Clausthal-Zellerfeld (DE)
(74) Vertreter: Klüppel, Walter
(86) Internationale Anmeldenummer: PCT/EP2003/000237
(87) Internationale Veröffentlichungsnummer: WO 2003/060169

(56) Entgegenhaltungen:
- EP-A- 0 866 138
- FR-A- 2 644 558
- FR-A- 2 681 417
- US-A- 6 030 431
- US-B1- 6 450 799

## Beschreibung

Die Erfindung betrifft ein Verfahren zur pyrometallurgischen Behandlung von Metallen, Metallschmelzen und/oder Schlacken in einem metallurgischen Aggregat bzw. Schmelzgefäß, insbesondere zum Auf-/Einblasen von sauerstoffreichen Gasen und/oder kohlenstoffhaltigen Stoffen in einem Elektrolichtbogenofen (Electric Arc Furnace, EAF) mit Hilfe einer Injektorvorrichtung, die die sauerstoffreichen Gase auf Überschallgeschwindigkeit beschleunigt und in der fallweise den sauerstoffreichen Gasen die kohlenstoffhaltigen Stoffe, vorzugsweise Partikeln zugemischt werden und aus der der Hochgeschwindigkeitsstrahl, durch einen umgebenden gasförmigen Mantel geschützt, zur pyrometallurgischen Behandlung verwendet wird.

Bekannt sind Injektorvorrichtungen für fluide und partikelförmige Stoffe zum Einsatz in industriellen Aggregaten, vorzugsweise zur pyrometallurgischen Behandlung von Metallen und Metallschmelzen, insbesondere in Elektrolichtbogenöfen zum Auf-/Einblasen von sauerstoffreichen Gasen und/oder kohlenstoffhaltigen Partikeln in und/oder auf eine Schlacken/Schaumschlackenschicht eines Elektrolichtbogenofens zum Schäumen der Schlacke und/oder zum Auf-/Einblasen von sauerstoffreichen Gasen in und/oder auf die unterhalb der Schlacken-/Schaumschlacken-schicht befindliche Metallschmelze zu ihrer Entkohlung. Dabei bewirkt die Injektorvorrichtung, dass die sauerstoffreichen Gase mittels einer Düse auf Überschallgeschwindigkeit beschleunigt und fallweise den sauerstoffreichen Gasen die kohlenstoffhaltigen Partikeln zugemischt werden.

Das Einschmelzen fester Einsatzstoffe wie beispielsweise Schrott oder Eisenschwamm in Elektrolichtbogenöfen erfordert große Energiemengen (ca. 550 bis 750 kWh/t Rohstahl). Zur Senkung des Elektroenergiebedarfs sowie zur Verkürzung der Schmelzzeit wird zusätzlich chemische Energie (z. B. Erdgas oder Kohle) eingesetzt. Zur Gewährleistung hoher Reaktionstemperaturen erfolgt deren Verbrennung zumeist mit technisch reinem Sauerstoff. Hierdurch wird gleichzeitig die zu behandelnde spezifische Abgasmenge gegenüber der Verwendung von Luft deutlich verringert. Während bestimmter Phasen des Schmelzprozesses erfolgt das Einblasen von Sauerstoff und/oder von Primärenergieträgern (z. B. Erdgas) zur Unterstützung bzw. Beschleunigung der Schrotterwärmung und Schrottniederschmelzung. Die Reaktion erfolgt oberhalb der Schmelze, bevorzugt in direktem Kontakt mit dem einzuschmelzenden Feststoff. Die Zugabe des Erdgases und des Sauerstoffs erfolgt dabei über spezielle Brenner in der Ofenwand oder mittels wassergekühlter Lanzen.

Eine weitere Phase bei der pyrometallurgischen Behandlung ist die Schaumschlackenphase. Die Schaumschlacke soll die Ofenwände während der Flachbadphase gegen die Lichtbogenstrahlung abschirmen, um Überhitzungen der Wandbereiche zu vermeiden, die elektrische Leistungsabnahme des Lichtbogens zu vergleichmäßigen und durch Verminderung der Strahlungsverluste insgesamt eine hohe Energieeffizienz zu ermöglichen. Zur Bildung von Schaumschlacken werden gleichzeitig feinkörnige Kohlenstoffträger und Sauerstoff bevorzugt in die Grenzschicht zwischen Schlacke und Metall eingeblasen.

Die Zugabe der Kohlenstoffträger erfolgt vorzugsweise in den Bereich der Grenzschicht zwischen Metallschmelze und Schlacke (teilweise auch unter die Oberfläche der Metallschmelze). Als Trägergas werden bevorzugt Pressluft, Stickstoff, aber auch gasförmige Kohlenwasserstoffe verwendet.

Das Eindüsen von Sauerstoff erfolgt vorzugsweise in den Bereich der Grenzschicht zwischen Metallschmelze und Schlacke zur partiellen Oxidation des eingedüsten Kohlenstoffs sowie zur Entkohlung der Metallschmelze. Bei der partiellen Oxidation des im Kohlenstoffträger enthaltenen Kohlenstoffs entsteht gasförmiges Kohlenmonoxid (CO). Das CO entweicht aus der Schlacke in Form von Gasblasen. Dies bewirkt ein Aufschäumen der Schlacke. Die Schaumschlacke verbessert die Energieausnutzung und verringert die Belastung der feuerfesten Ausmauerung des Elektrolichtbogenofens. Das CO kann durch gesonderte Zugaben weiterer Oxidantien intern oder extern nachverbrannt werden.

Die Zugabe von Kohlenstoffträgern, Sauerstoff und weiteren Oxidantien erfolgt kombiniert oder getrennt über
a) spezielle Injektor-/Düsenvorrichtungen in der Ofenwand
b) gekühlte Lanzen durch die Tür/die Ofenwand/den Deckel
c) ungekühlte Lanzen durch die Tür /die Ofenwand/den Deckel.
d) Unterbaddüsensysteme.

Die für die beschriebenen Aufgaben verwendeten Vorrichtungen und Verfahren weisen, insbesondere folgende Nachteile auf:
Bei der Gas-/Feststoffeindüsung über eine gemeinsame Injektorvorrichtungen müssen die oben genannten Funktionalitäten in einer Einheit integriert werden. Die während der einzelnen Prozessschritte einzudüsenden Komponenten stellen unterschiedliche und teilweise einander widersprechende Anforderungen an das zugehörige Injektorsystem (Strömungsgeschwindigkeit, Ort der Eindüsung, Mischungs-/Ausbrandverhalten, Eintrag in die Schmelze etc.) dar. Daher werden die Einheiten entweder sehr groß oder es müssen Kompromisslösungen realisiert werden.

Aus der EP 0 964 065 A1 ist eine aus zwei Bauteilen bestehende Injektorvorrichtung bekannt, bei der ein Bauteil als Überschallsauerstoffinjektor und der andere Bauteil als Kohleinjektor fungiert. Die Achsen der beiden Bauteile sind so ausgerichtet, dass sich die beiden erzeugten Strahlen oberhalb des Badspiegels schneiden. Um eine weitgehende Fokussierung des jeweils zentralen Sauerstoff- bzw. Kohlenstrahls zu gewährleisten, werden diese mit einem Erdgasstrahl umhüllt, der aus einem um die zentrale Düsenöffnung angeordneten Düsenring austritt.

In der US 5,904,895 wird eine wassergekühlte Injektorvorrichtung beschrieben mit einer Verbrennungskammer zur Erzeugung einer Hochgeschwindigkeitsflamme zum Niederschmelzen der vor der Verbrennungskammer befindlichen Feststoffe. Mit fortschreitender Einschmelzdauer können feindisperse Feststoffe, beispielsweise Kohle sowie zusätzlicher Sauerstoff mit Hochgeschwindigkeit in den Elektrolichtbogenofen eingebracht werden, wobei der Feststoff seitlich dem bereits beschleunigten Sauerstoffstrahl zugemischt wird. Hierbei wird sowohl der Feststoffstrahl als auch der Hochgeschwindigkeitssauerstoffstrahl durch einen sie umgebenden Flammenmantel geschützt.

In der EP 0 866 138 A1 wird eine Methode zum Eindüsen von Gasen (z. B. Sauerstoff und Erdgas) in eine Schmelze beschrieben. Hierbei wird der zentral aus einem Injektor austretende Sauerstoff mit einer LAVAL-Düse auf Überschall beschleunigt. Damit der Strahl seinen Austrittsimpuls möglichst lange aufrecht erhält, wird er durch einen ihn (vollständig) umhüllenden Flammenmantel geschützt. Der Flammenmantel entsteht bei der Verbrennung des aus einem um die LAVAL-Düse konzentrischen Ringspaltes bzw. Düsenrings austretenden Erdgases mit Sauerstoff. Der Sauerstoff wird über einen außerhalb des Erdgas-Ringes konzentrisch angeordneten zweiten Ringspalt bzw. Düsenring zugeführt.

Die EP 1 092 785 A1 beschreibt eine Injektorvorrichtung, welche auf dem Prinzip der EP 0 866 138 A1 beruht und zusätzlich noch die Eindüsung partikelförmiger Feststoffe erlaubt. Die Zugabe des Feststoffes erfolgt dabei ebenso wie die Sauerstoffzugabe innerhalb des Flammenmantels.

Die EP 0 848 795 beschreibt ein Verfahren zur Verbrennung von Brennstoff sowie einen dazugehörigen Brenner. Als Brennstoffe werden sowohl Erdgas als auch partikelförmige Feststoffe verwendet. Hierbei werden in einen zylinderförmigen bzw. sich schwach kegelförmig in Strahlrichtung erweiternden SauerstoffHauptstrahl mehrere windschief zur zentralen Längsachse gerichtete Erdgasstrahlen geblasen. Der Hauptstrahl wird durch eine LAVAL-Düse auf Überschall beschleunigt. Die Brennstoffstrahlen umgeben den Hauptstrahl und dringen erst stromabwärts in diesen ein. Im Innern des Hauptstrahles wird durch ein Zentralrohr ein zweiter Brennstoffstrahl gebildet, mit dem Erdgas oder Feststoff in den Hauptstrahl nach dessen Beschleunigung eingedüst wird.

Um bei Injektorvorrichtungen die Ausweitung der Strahlen möglichst auf einer längeren Wegstrecke zu unterdrücken, werden die erzeugten Strahlen vielfach mit einem Flammenmantel umgeben, der üblicherweise durch Verbrennung von Erdgas erzeugt wird. Der Flammenmantel bewirkt den Nachteil eines unerwünschten Impulsverlustes des zentralen Gasstrahls, da die Strömungsgeschwindigkeiten der Mantelstrahlen wesentlich geringer als die des zentralen Gasstrahls sind. Außerdem erfordert diese Maßnahme einen zusätzlichen Stoffeinsatz und damit höhere Energiekosten. Dieses ist aus prozesstechnischer Sicht weitgehend unnötig und streckenweise auch ineffektiv.

Ausgehend von diesem bekannten Stand der Technik ist es Aufgabe der Erfindung, eine Injektorvorrichtung zu entwickeln und ein Arbeitsverfahren anzugeben, mit dem es möglich ist, die Länge eines frei in den Innenraum eines metallurgischen Aggregats ausströmenden sauerstoffreichen Gases und seine Eindringtiefe in eine vorhandene Schlackenschicht zu maximieren. Hierbei sollen insbesondere die Nachtelle bekannter Einrichtungen für den gemeinsamen Einsatz von Sauerstoff und Feststoff bei unterschiedlichen Betriebszuständen, nämlich
- hoher spezifischer Energieeinsatz
- erforderliche Manipulationen bzw. mehrere Öffnungen im metallurgischen Aggregat
- komplizierter Aufbau
weitgehend vermieden werden.

Die gestellte Aufgabe wird verfahrensmäßig mit einer Injektorvorrichtung der eingangs genannten Art mit den kennzeichnenden Maßnahmen des Anspruchs 1 dadurch gelöst, dass der gasförmige Mantel ein Heißgas ist, das dem zentralen Hochgeschwindigkeitsstrahl so zugeführt wird, dass die Relativgeschwindigkeit und der Impulsaustausch zwischen dem zentralen Hochgeschwindigkeitsstrahl und dem Heißgasmantelstrahl minimiert wird (quasi isokinetische zuführung).

Eine Injektorvorrichtung zur Durchführung dieses erfindungsgemäßen Verfahrens ist durch die Merkmale des Anspruchs 21 gekennzeichnet. Vorteilhafte Ausgestaltungen und Weiterbildungen der Erfindung sind in den zugeordneten Unteransprüchen angegeben.

Durch das erfindungsgemäße Verfahren, den zentralen sauerstoffreichen Gasstrahl, mit einem Heißgas mit möglichst geringem Impulsverlust zu ummanteln, wird mit Vorteil eine Maximierung der Länge und der Eindringtiefe des Gasstrahls in die oberhalb der Metallschmelze befindlich Schlackenschicht zur Erzeugung einer intensiven Durchmischung und Bewegung sowie eine Verbesserung der Eindüsung partikelförmiger Feststoffe, beispielsweise Kohlenstoffträger, Stäube oder Zuschlagstoffe erreicht.

Hierzu wird der zentrale Gasstrahl über einen Sauerstoffinjektor (ein längeres Rohr mit einer LAVAL-Düse) geführt und auf eine Geschwindigkeit zwischen 300 bis 850 m/s beschleunigt und im Gegensatz zu den bekannten Lösungen mit einem Mantelstrahl aus Heißgas umhüllt. Das Heißgas wird dabei durch externe Verbrennung in einem Heißgaserzeuger, beispielsweise von Erdgas mit Luft in einem handelsüblichen Hochgeschwindigkeitsbrenner, durch Rezirkulation heißer Ofenabgase mittels eines separaten Hochtemperaturverdichters oder durch Kombination beider Maßnahmen bereitgestellt.

Sofern die Heißgaserzeugung durch externe Reaktion eines Brennstoffes mit einem Oxidator erfolgt, wird hierzu ein Oxidator mit Sauerstoffgehalten von 10 bis 100 Vol.-%, vorzugsweise 21 Vol.-%, verwendet. Der Oxidationsvorgang wird in jedem Fall überstöchiometrisch betrieben. Die Luftzahl im Heißgaserzeuger wird zwischen 1,05 und 2,0 (vorzugsweise 1,3 - 1,5) eingestellt. Der Oxidator kann auf Temperaturen zwischen 50 °C und 600 °C vorgewärmt werden (vorzugsweise zwischen 200 °C und 400 °C). Die Vorwärmung kann extern oder innerhalb der Injektorvorrichtung erfolgen. Vorzugsweise wird die Vorwärmung des Oxidators in das Kühlsystem der Injektorvorrichtung integriert bzw. ist wesentlicher Bestandteil desselben.

Die Temperatur des Heißgases beträgt bei Eintritt in den Injektorbrenner zwischen 300 bis 1800 °C. In diesem Temperaturbereich ist die Schallgeschwindigkeit des Heißgases infolge der zugrunde liegenden thermodynamischen Zusammenhänge wesentlich höher als die des kalten Zentralstrahls. Damit wird die Austrittsgeschwindigkeit des Heißgases bereits mit einer einfachen Düse in den Bereich der Strömungsgeschwindigkeit des Zentralstrahls angehoben.

Zur Temperaturregelung ist es gemäß der Erfindung möglich, dem Heißgas vor seiner Beschleunigung Wasser zuzudüsen. Hierdurch ist eine schnelle und exakte Temperaturführung gewährleistet. Außerdem wirkt sich der erhöhte Wasserdampfanteil positiv auf die Reaktionsatmosphäre im Ofenraum aus.

Die Injektorvorrichtung der Erfindung besteht in modularem Aufbau aus einem längeren Rohr mit einer LAVAL-Düse, dem Sauerstoffinjektor für die Beschleunigung der sauerstoffreichen Gase, deren Austrittsbereich von einer Ringspaltdüse oder einer ähnlichen konstruktiven Lösung mit vergleichbarer Wirkung für den Durchtritt der Heißgase umgeben ist. Zum Zwecke der Fokussierung und um die Strömungsverhältnisse in der Austrittsebene zu verbessern, ist der Austrittsbereich beider Gase durch eine Heißgashülse verlängert.

Zur Eindüsung partikelförmiger Stoffe ist zentral im Sauerstoffinjektor ein Additivinjektor in Form eines zusätzlichen koaxialen Rohres mit einer Austrittsöffnung angeordnet. Der Additivinjektor ist axial verschiebbar. Die Austrittsebene B des Additivinjektors kann hierbei sowohl vor, in als auch hinter dem Eintrittsquerschnitt des Konfusors der LAVAL-Düse des Sauerstoffinjektors positioniert werden (Betrachtung jeweils in Strömungsrichtung). Die Positionierung der Austrittsöffnung des Additivinjektors innerhalb des Sauerstoffinjektors kann durch axiale Verschiebung des Additivinjektors oder des Sauerstoffinjektors oder durch eine Kombination erfolgen. Die Austrittsöffnung des Additivinjektors kann als einfache Mündung oder als Düse ausgeführt sein. Vorzugsweise wird die Austrittsöffnung des Additivinjektors vor der LAVAL-Düse des Sauerstoffinjektors positioniert, so dass die partikelförmigen Stoffe gemeinsam mit dem sauerstoffreichen Gas durch die LAVAL-Düse beschleunigt werden.

Wegen der hohen Verschleißbelastung durch partikelförmige Stoffe ist die Austrittsöffnung des Additivinjektors zweckmäßigerweise aus einem verschleißfesten Material gefertigt. Zum Schutz der äußeren Hülle des Sauerstoffinjektors kann diese mit einer keramischen Schutzschicht versehen oder mit einem keramischen Schutzrohr umgeben werden.

Es ist aber auch möglich, andere nicht partikelförmige Stoffe durch diesen Additivinjektor in den sauerstoffreichen Gasstrahl einzudüsen, beispielsweise gasförmige Brennstoffe, wie Erdgas oder flüssige Brennstoffe wie Öle. Zur Anpassung an die speziellen Erfordernisse der jeweiligen Brennstoffart sind deshalb unterschiedliche Ausführungen des Additivinjektors erforderlich. Daher ist dieser durch eine geeignete konstruktive Ausbildung schnell und mit nur geringem Aufwand an die jeweiligen Prozesserfordernisse anpassbar und beispielsweise mit einer auswechselbarem Austrittsdüse versehen und mit geeigneten Zusatzeinrichtungen manuell oder automatisch axial verschiebbar ausgebildet.

Die Injektorvorrichtung zur Gas- und Feststoffeindüsung der Erfindung ist modular aufgebaut. Die einzelnen Baugruppen sind auf einer gemeinsamen Trägereinheit montiert, die fest in der Wand des metallurgischen Aggregats angeordnet ist. Hierdurch wird unerwünschter Eintritt von Umgebungsluft in das Ofengefäß als auch das gefährliche Austreten von Reaktionsgasen in die Umgebung sicher verhindert.

Die Injektorvorrichtung ist universell für die Zugabe aller während der einzelnen Phasen der metallurgischen Behandlung jeweils notwendigen Stoffe (Sauerstoff, Sauerstoffträger, Zusatzstoffe etc.) in der jeweils erforderlichen Qualität und Quantität verwendbar durch die Ausbildung aus robusten, konstruktiv einfachen Komponenten. Dies garantiert einen geringen Wartungs- und Installationsaufwand und ermöglicht im Bedarfsfall ein schnelles Auswechseln einzelner Bauteile auch bei laufendem Ofenbetrieb.

Zur Gewährleistung einer hohen Effizienz des Injektorsystems können mehr als eine Injektorvorrichtung an dem Schmelzaggregat installiert werden (vorzugsweise zwei bis vier). Der Betrieb der installierten Injektorvorrichtungen wird dann durch ein übergeordnetes System koordiniert und überwacht.

Weitere Vorzüge, Einzelheiten und Merkmale der Erfindung werden nachfolgend anhand von in schematischen Zeichnungsfiguren dargestellten Ausführungsbeispielen näher erläutert.

Es zeigen:
- Fig. 1: einen Schnitt durch eine erfindungsgemäße Injektorvorrichtung (Grundversion),
- Fig. 2: einen Schnitt durch die Injektorvorrichtung gemäß Fig. 1 mit einem Additivinjektor,
- Fig. 3: Verfahrensfließbild der Injektorvorrichtung,
- Fig. 4: MSR-Schema (Verfahrensfließbild) der Injektorvorrichtung.

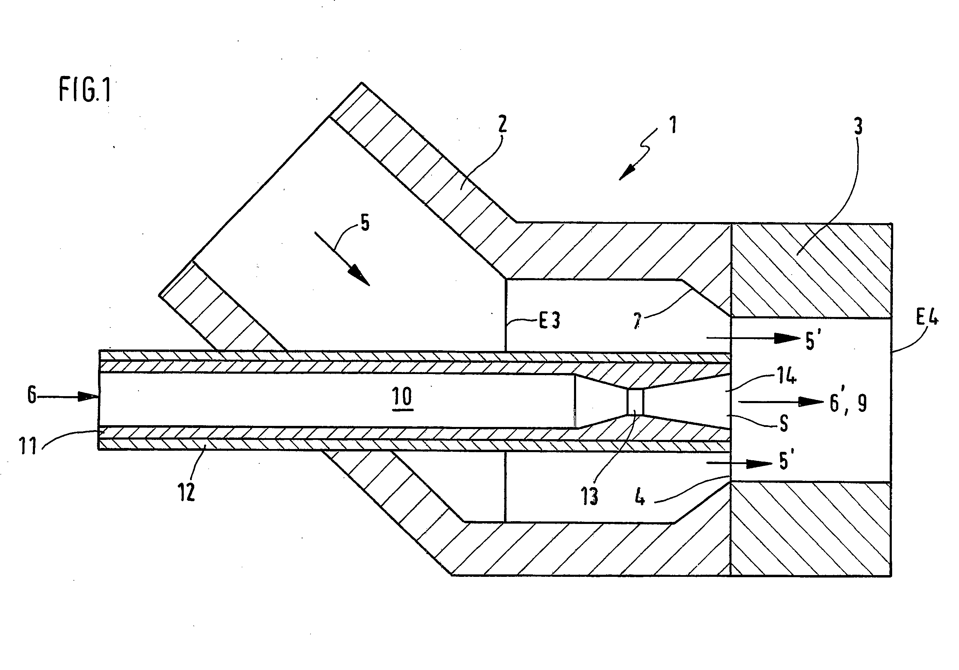

In Figur 1 ist in einer geschnittenen schematischen Darstellung eine Injektorvorrichtung 1 der Erfindung abgebildet, die im dargestellten Ausführungsbeispiel im Wesentlichen aus einem gewinkelten Heißgasstutzen 2 besteht, in den seitlich ein Sauerstoffinjektor 10 eingeführt ist. Die Einführung des Sauerstoffinjektors 10 erfolgt hierbei vorzugsweise so, dass die Längsachse des horizontalen Teils der Injektorvorrichtung 1 mit der Längsachse des Sauerstoffinjektors 10 zusammen fällt. An seinem vorderen Ende - in der Zeichnungsfigur rechts - ist der lichte Durchmesser des Heißgasstutzens 2 durch eine schräg nach innen verlaufende Verdickung 7 (Konfusor) so weit eingeengt, dass der Heißgasstutzen 2 mit dem Sauerstoffinjektor 10 in diesem Bereich eine konzentrische Ringspaltdüse 4 oder eine ähnliche konstruktive Lösung mit vergleichbarer Wirkung (im folgenden vereinfachend als Ringspaltdüse bezeichnet) ausbildet.

Der in den Heißgasstutzen 2 eingeführte Sauerstoffinjektor 10 besteht aus einem länglichen Rohr bzw. der Injektorinnenwand 11, umgeben von einer keramischen Schutzschicht 12 und mit einer im vorderen Bereich ausgebildeten LAVAL-Düse 13. Durch diese LAVAL-Düse 13 wird das sauerstoffreiche Gas 6 in Pfeilrichtung geführt, dabei beschleunigt und tritt als zentraler Gasstrahl 6' aus der Austrittsöffnung 14 in Pfeilrichtung aus. In diesem Austrittsbereich wird das sauerstoffreiche Gas 6' von dem in gleicher Richtung strömenden und in der Ringspaltdüse 4 beschleunigten Heißgas 5' ummantelt. Zur Fokussierung der Gasstrahlen 5', 6' ist dieser Austrittsbereich durch eine Heißgashülse 3 verlängert, deren Innendurchmesser dem kleinsten Außendurchmesser der Ringspaltdüse 4 entspricht.

Dieser Sauerstoffinjektor 10 ist axial verschiebbar ausgebildet, wobei seine Austrittsebene 5 in jeder beliebigen Position zwischen den Ebenen E3 und E4 des Heißgasstutzens 2 positionierbar ist.

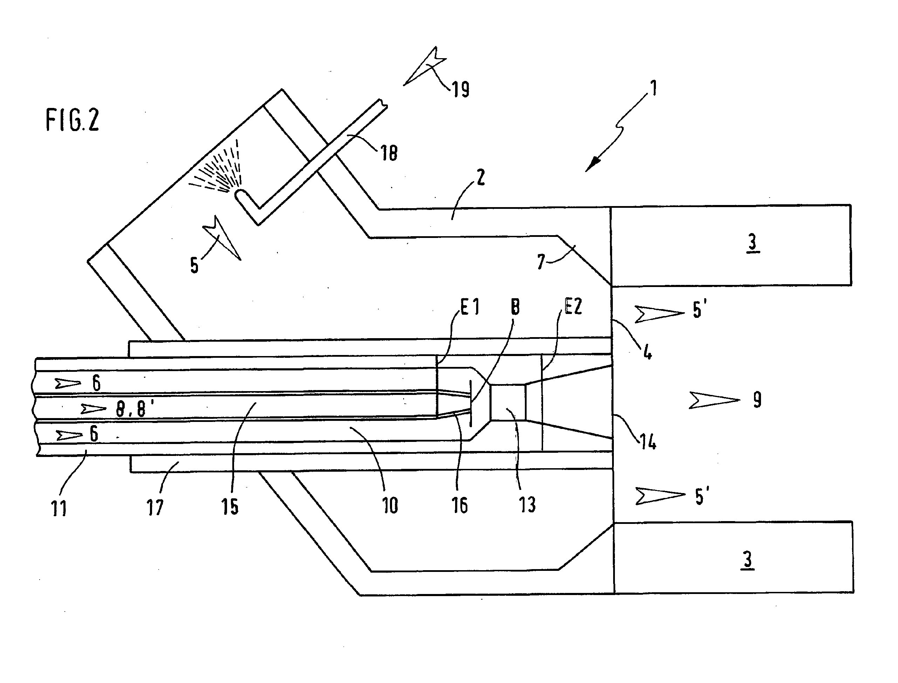

Figur 2 zeigt eine Injektorvorrichtung 1, die gegenüber der Injektorvorrichtung 1 der Fig. 1 durch einen zusätzlichen Additivinjektor 15 sowie eine Wassereindüsung 18 erweitert wurde. Gleiche Bauteile wurden zur besseren Übersicht mit den gleichen Bezugsziffern gekennzeichnet. Die Wassereindüsung 18 befindet sich im Eintragsbereich der Injektorvorrichtung 1 im Heißgasstutzen 2 und ist so angeordnet, dass das Wasser 19 entgegen der Strömungsrichtung des Heißgases 5 in diesem Bereich eingedüst werden kann. Der Sauerstoffinjektor 10 ist nun nicht mehr mit einer keramischen Schutzschicht, wie im Ausführungsbeispiel der Fig. 1 umgeben, sondern wird hier durch ein keramisches Schutzrohr 17 gehalten. Der Additivinjektor 15 besteht im Wesentlichen aus einem längeren Rohr mit einer vorderen Brennstoffdüse 16 und ist soweit in den Sauerstoffinjektor 10 eingeschoben, dass die Öffnung der Düse 16 sich noch vor der LAVAL-Düse 13 des Sauerstoffinjektors 10 befindet. Auf diese Weise werden die kohlenstoffhaltigen Stoffe 8, 8' und das sauerstoffreiche Gas 6 gemeinsam als Zentralstrahl 9 aus der Austrittsöffnung 14 ausgetragen.

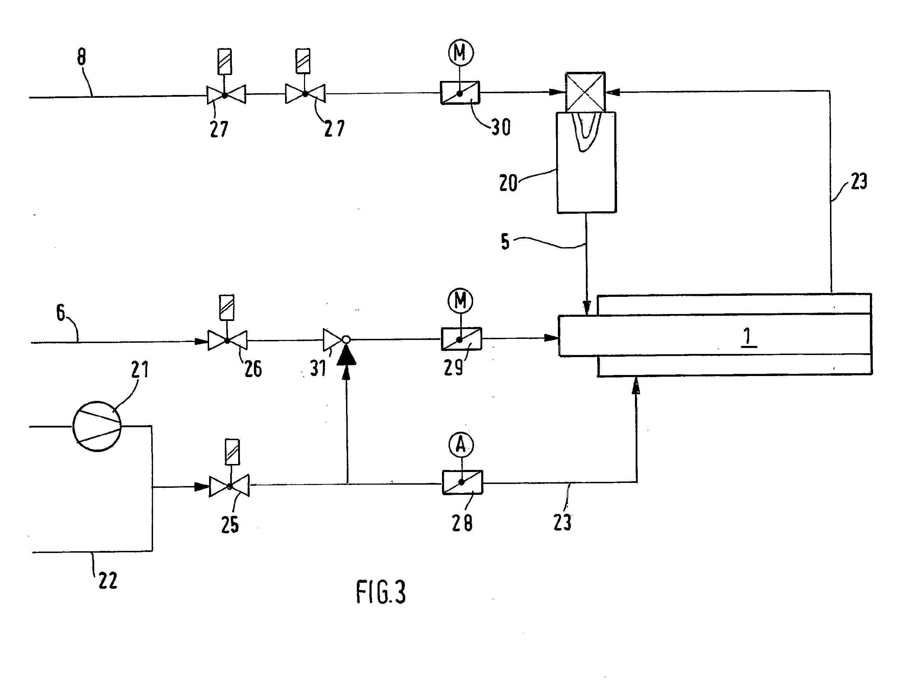

Figur 3 zeigt die prinzipielle Zuführung der zum Betrieb der Injektorvorrichtung 1 erforderlichen Medien sowie eine typische Verschaltung der Injektorvorrichtung 1. Das Heißgas 5 wird extern in einem separaten Heißgaserzeuger 20 aus einem Brennstoffstrom 8 und einem Oxidatorstrom 6 erzeugt. Der Heißgaserzeuger 20 wird vorteilhaft direkt mit der Injektorvorrichtung verbunden bzw. ist wesentlicher Bestandteil derselben. Im dargestellten Beispiel wird als Oxidator Luft 23 verwendet. Die Luft 23 kann über ein separates Gebläse 21 bereitgestellt oder aus einem Druckluftnetz 22 entnommen werden. Die Luft 23 wird vor der Zuführung zum Heißgaserzeuger 20 zunächst zur Kühlung des Außenwände der Injektorvorrichtung 1 verwendet. Sie wird hierdurch auf Temperaturen von 50 bis 600 °C vorgewärmt. Diese Vorwärmung wirkt sich positiv auf den Brennstoffeinsatz im Heißgaserzeuger 20 aus. Der Heißgaserzeuger 20 bleibt ununterbrochen in Betrieb. Gleiches gilt für das Kühlsystem. Durch Betätigung der Absperrarmaturen 25, 26, 27 wird die Versorgung der jeweiligen Medienströme gestartet bzw. unterbrochen. Die Regulierung der Volumenströme erfolgt mit Hilfe der Regelarmaturen 28, 29, 30. Ist die Sauerstoffinjektion in Betrieb, ist das Mehrwegeventil 31 so geschlossen, dass die Luftzufuhr zum Sauerstoffinjektor unterbrochen ist. Ist aus prozesstechnischen Gründen keine Sauerstoffinjektion erforderlich, wird das Mehrwegeventil 31 so geschlossen, dass die Sauerstoffzufuhr zum Sauerstoffinjektor 10 unterbrochen wird. In diesem Fall wird der Sauerstoffinjektor 10 mit Luft 23 beaufschlagt.

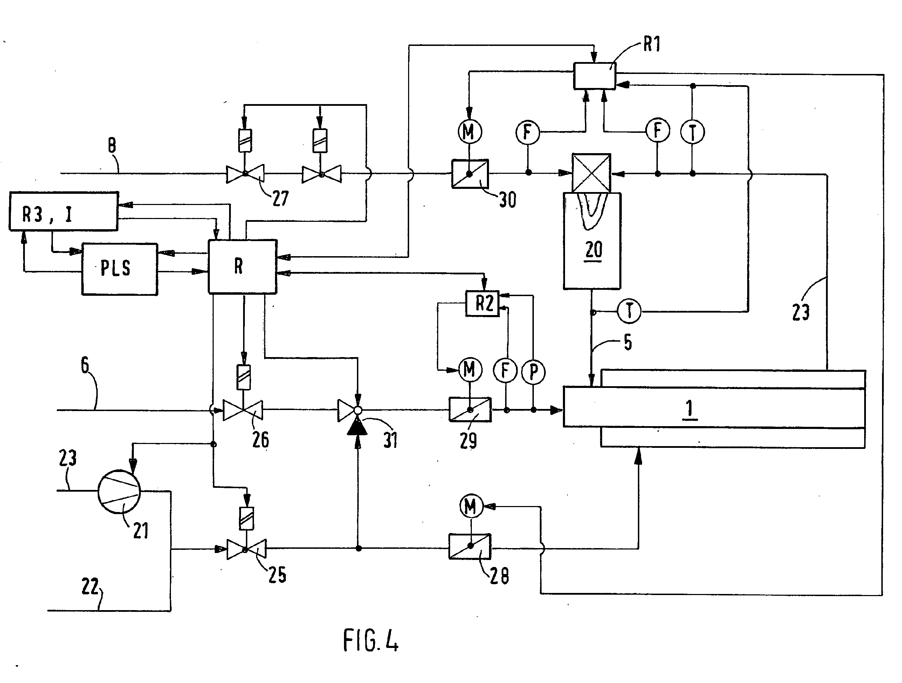

Figur 4 zeigt das MSR-Schema (Verfahrensfließbild) für die Injektorvorrichtung 1. Für den ordnungsgemäßen und sicheren Betrieb der Injektorvorrichtung 1 müssen die Positionen der Absperrarmaturen 25, 26, 27 überwacht und kontrolliert verändert werden. Das Auftreten unzulässiger oder gefährlicher Betriebszustände wird durch entsprechende VerriegelungenNerblockungen vermieden. Die Zentral-Automatisierungseinheit R kommuniziert mit dem übergeordneten PLS (Prozess-Leit-System) des metallurgischen Aggregates und leitet je nach Betriebsweise die erforderlichen Befehle an die untergeordneten Einheiten sowie die R1 und R2 weiter. Die Automatisierungseinheit R1 ist für die Regelung der Heißgastemperatur, der Heißgaserzeuger-Leistung und der Luftzahl zuständig. Die hierfür erforderlichen Prozessgrößen werden durch entsprechende Sensoren kontinuierlich erfasst und an den Rechner übermittelt. Die Automatisierungseinheit R2 dient der Regelung des Sauerstoffvolumenstromes.

Die Regelung des Betriebs des Additivinjektors 15 erfolgt durch eine weitere Automatisierungseinheit (z. B. für Massenstrom, Vordruck). Diese beispielsweise mit R3 zu bezeichnende Automatisierungseinheit ist in Fig. 4 schematisch dargestellt.

Erfindungsgemäß können mehrere, vorzugsweise zwei bis vier Injektorvorrichtungen 1 an einem metallurgischen Aggregat angeordnet sein. Zur gemeinsamen Regelung dieser Injektorvorrichtungen I erfolgt dann ein Datenaustausch zwischen der Automatisierungseinheit R und dem übergeordneten PLS.

### Bezugszeichenliste

- 1: Injektorvorrichtung
- 2: Heißgasstutzen
- 3: Heißgashülse
- 4: Ringspaltdüse
- 5, 5': Heißgas
- 6, 6': sauerstoffreiches Gas
- 7: Verdickung
- 8: Brennstoff
- 9: Zentralstrahl
- 10: Sauerstoffinjektor
- 11: Injektorinnenwand
- 12: keramische Schutzschicht
- 13: LAVAL-Düse
- 14: Austrittsöffnung
- 15: Additivinjektor
- 16: Austrittsöffnung
- 17: keramisches Schutzrohr
- 18: Wassereindüsung
- 19: Wasser
- 20: Heißgaserzeuger
- 21: Gebläse
- 22: Druckluftnetz
- 23: Luft
- 25, 26, 27: Absperrarmaturen
- 28, 29, 30: Regelarmaturen
- 31: Mehrwegeventil
- I: weitere Injektorvorrichtungen 1
- PLS: Prozessleitsystem
- R: Zentral-Automatisierungseinheit
- R1: Automatisierungseinheit
- R2: Automatisierungseinheit
- R3: Automatisierungseinheit

## Patentansprüche

1. Verfahren zur pyrometallurgischen Behandlung von Metallen, Metallschmelzen undloder Schlacken in einem metallurgischen Aggregat bzw. Schmelzgefäß, insbesondere zum Auf-/Einblasen von sauerstoffreichen Gasen in einem Elektrolichtbogenofen mit Hilfe einer Injektorvorrichtung (1), die die sauerstoffhaltigen Gase (6) auf Überschallgeschwindigkeit beschleunigt und aus der dieser Hochgeschwindigkeitsstrahl (6'), durch einen ihn vollständig umhüllenden gasförmigen Mantel (V) geschützt, zur pyrometallurgischen Behandlung verwendet wird, **dadurch gekennzeichnet, dass** der gasförmige Mantel ein Heißgas (5) ist, das dem zentralen Hochgeschwindigkeitsstrahl (6') so zugeführt wird, dass die Relativgeschwindigkeit und der Impulsaustausch zwischen dem zentralen Hochgeschwindigkeitsstrahl (6') und dem Heißgasmantelstrahl (5') minimiert wird, wozu der Hochgeschwindigkeitsstrahl (6') in der Injektorvorrichtung (1) in einem Düsensystem mit einer LAVAL-Düse auf eine Geschwindigkeit von 300 bis 850 m/s beschleunigt und das Heißgas (5) mittels einer Ringspalt-Düse (4) der Injektorvorrichtung (1) auf eine annähernd gleich hohe Geschwindigkeit beschleunigt wird und wobei das Heißgas (5) bei seinem Eintritt in die Injektorvorrichtung (1) eine Temperatur von 300 bis 1800 °C aufweist.

2. Verfahren nach Anspruch 1, **dadurch gekennzeichnet, dass** der Impulsaustausch zwischen dem zentralen Hochgeschwindigkeitsstrahl (6') Heißgasmantelstrahl (5') isokinetisch erfolgt.

3. Verfahren nach Anspruch 1, **dadurch gekennzeichnet, dass** das Heißgas (5) durch externe Reaktion eines Brennstoffs (8, 8) mit einem Oxidator und/oder durch Rezirkulation heißer Gase aus dem metallurgischen Aggregat bereitgestellt wird.

4. Verfahren nach Anspruch 1 oder 3, **dadurch gekennzeichnet, dass** zur Erzeugung des Heißgases vorgewärmter Oxidator mit einem Sauerstoffgehalt von 10 bis 100 Vol -% verwendet wird.

5. Verfahren nach Anspruch 4, **dadurch gekennzeichnet, dass** zur Erzeugung des Heißgases vorgewärmter Oxidator mit einem Sauerstoffgehalt von 21 Vol.-% verwendet wird.

6. Verfahren nach Anspruch 1 oder 4, **dadurch gekennzeichnet, dass** die Vorwärmung des Oxidators in das Kühlsystem der Injektorvorrichtung (1) integriert und/oder wesentlicher Bestandteil desselben ist.

7. Verfahren nach Anspruch 1, 3, 4 oder 6, **dadurch gekennzeichnet, dass** die Einstellung der Heißgastemperatur am Eintritt in die Injektorvorrichtung (1) über eine Leistungsregelung des Meißgaserzeugers (20) und/oder über die Zudosierung von flüssigem Wasser (19) zum Heißgas vor dessen Beschleunigung erfolgt.

8. Verfahren nach einem oder mehreren der Ansprüche 1 bis 7, **dadurch gekennzeichnet, dass** der Sauerstoffgehalt der sauerstoffhaltigen Gase (6) 10 bis 100 Vol.-% beträgt.

9. Verfahren nach Anspruch 8, **dadurch gekennzeichnet, dass** der Sauerstoffgehalt der sauerstoffhaltigen Gase (6) vorzugsweise > 95 Vol.-% beträgt.

10. Verfahren nach einem oder mehreren der Ansprüche 1 bis 8, **dadurch gekennzeichnet, dass** dem zentralen Sauerstoffstrahl (6) fallweise partikelförmige Feststoffe und/oder fluide Stoffe (8) zugeführt werden, wobei die Zuführung dieser Substanzen mittels eines koaxial innerhalb des Sauerstoffinjektors (10) angeordneten Additivinjektors (15) zentral, richtungsgleich und vor Abschluss des Beschleunigungsvorganges-des-Sauerstoffstrahles (6) erfolgt.

11. Verfahren nach Anspruch 10, **dadurch gekennzeichnet, dass** die partikelförmigen Feststoffe (8) Kohlenstoff, Alkali- und/oder Erdalkallmetalle und die fluiden Stoffe (8') Kohlenstoff jeweils in hoher Konzentration > 30 Gew.-% enthalten.

12. Verfahren nach Anspruch 11, **dadurch gekennzeichnet, dass** die partikelförmigen Feststoffe (8) Kohlen- oder Koksstaub enthalten.

13. Verfahren nach Anspruch 11, **dadurch gekennzeichnet, dass** die partikelförmigen Feststoffe (8) Kalkstein, Branntkalk oder Dolomit enthalten.

14. Verfahren nach Anspruch 11, **dadurch gekennzeichnet, dass** die fluiden Stoffe (8') Erdgas, Koksgas, Konvertergas, Heizöl enthalten.

15. Verfahren nach einem oder mehreren der Ansprüche 1 bis 11, dadurch **gekenn** zeichnet, dass der Sauerstoffinjektor (10) wechselweise mit technischem Sauerstoff und Luft betrieben wird, wobei die Umschaltung von der Sauerstoffeinspeisung auf die Lufteinspeisung und wieder zurück über ein Mehrwegeventil (31) erfolgt und zur Luftversorgung die Oxidatorquelle oder ein Druckluftnetz (22) oder ein Gebläse (21) genutzt werden.

16. Verfahren nach einem oder mehreren der Ansprüche 1 bis 15, **dadurch gekennzeichnet, dass** die Regelung des Betriebes des Heißgaserzeugers (20), mit λ-Regelung der Verbrennung, Regelung der Heißgastemperatur, Regelung der Kühltuftaustrittstemperatur durch die Automatisierungseinheit (R1) erfolgt.

17. Verfahren nach einem oder mehreren der Ansprüche 1 bis 16, **dadurch gekennzeichnet, dass** die Regelung des Betriebes des Sauerstoffinjektors (10), mit Volumenstrom, Vordruck durch die Automatisierungseinheit (R2) erfolgt.

18. Verfahren nach einem oder mehreren der Ansprüche 1 bis 17, **dadurch gekennzeichnet, dass** die Regelung des Betriebes des Additivinjektors (15), mit Massenstrom, Vordruck durch eine weitere Automatisierungseinheit (R3) erfolgt.

19. Verfahren nach einem oder mehreren der Ansprüche 1 bis 18, **dadurch gekennzeichnet dass** an dem metallurgischen Aggregat mehr als eine Injektorvorrichtung (1), installiert werden.

20. Verfahren nach einem oder mehreren der Ansprüche 1 bis 19, **dadurch gekennzeichnet, dass** die Koordination des Betriebes der Automatisierungseinheiten (R1, R2, R3, 1) durch eine übergeordnete Zentral-Automatisierungseinheit (R) erfolgt, die im Datenaustausch mit dem Prozessleitsystem (PLS) des metallurgischen Aggregates steht oder autark ist, wobei ein Datenaustausch mit den entsprechenden Automatisierungseinheiten weiterer Injektorvorrichtungen (1) erfolgt.

21. Injektorvorrichtung (1) zur pyrometalturgischen Behandlung von Metallen, Me tallschmelzen und/oder Schlacken in einem metallurgischen Aggregat oder Schmelzgefäß, zum Auf-/Einblasen von sauerstoffreichen Gasen (6) und gegebenenfalls kohlenstoffhaltigen Stoffen (8) in einem Elektrolichtbogenofen, wobei die Injektorvorrichtung (1) die sauerstoffreichen Gase (6) auf Überschallgeschwindigkeit beschleunigt und in dem fallweise den sauerstoffreichen Gasen (6') die kohlenstoffhaltigen Stoffe (8), als Partikel zugemischt werden und aus der der Hochgeschwindigkeitsstrahl, durch einen umgebenden gasförmigen Mantel geschützt, zur pyrometallurgischen Behandlung verwendet wird, zur Durchführung des Verfahrens nach einem oder mehreren der vorhergehenden Ansprüche, **gekennzeichnet durch** einen modularen Aufbau der einzelnen Baugruppen, bestehend aus einem Sauerstoffinjektor (10) mit Injektorinnenwand (11) und LAVAL-Düse (13) für die Beschleunigung der sauerstoffreichen Gase (6), umgeben von einem Heißgasstutzen (2), dessen lichter Durchmesser **durch** eine schräg nach innen verlaufende Verdickung (7) so weit eingeengt ist, dass der Heißgasstutzen (2) mit dem Sauerstoffinjektor (10) in diesem Bereich eine Ringspaltdüse (4) für den Durchtritt und die Beschleunigung des Heißgases (5) bildet, wobei die Austrittsbereiche der Gase **durch** eine gemeinsame Heißgashülse (3) verlängert sind.

22. Injektorvorrichtung (1) nach Anspruch 20 oder 21, **dadurch gekennzeichnet, dass** im Eintrittsbereich des Heißgasstutzens (2) eine Wassereindüsung (18) angeordnet ist.

23. Injektorvorrichtung (1) nach einem oder mehreren der Ansprüche 20 bis 22, **dadurch gekennzeichnet, dass** innerhalb des zentralen Sauerstoffinjektors (10) ein Additivinjektor (15) in Form eines zusätzlichen koaxialen Rohres mit einer Austrittsöffnung (16) angeordnet ist, die als Mündung oder Düse ausgebildet ist.

24. Injektorvorrichtung (1) nach Anspruch 23, **dadurch gekennzeichnet, dass** die Austrittsöffnung (16) des Additivinjektors (15) aus einem verschleißfesten Material und auswechselbar ausgebildet ist

25. Injektorvorrichtung (1) nach einem oder mehreren der Ansprüche 20 bis 24, **dadurch gekennzeichnet, dass** die einzelnen Baugruppen der Injektorvorrichtung (1) auf einem fest in der Wand des metallurgischen Aggregats angeordneten gemeinsamen Baugruppenträger montiert sind.

## Claims

1. Method of pyrometallurgical treatment of metals, metal melts and/or slags in a metallurgical unit or melt vessel, particularly for blowing-on or injection of oxygen-rich gases in an electric arc furnace with the help of an injector device (1), which accelerates the gases (6) with oxygen content to supersonic speed and from which this high-speed jet (6'), which is protected by a gaseous shroud (V) completely surrounding it, is used for pyrometallurgical treatment, **characterised in that** the gaseous shroud is a hot gas (5) which is so fed to the central high-speed jet (6') that the relative speed and the pulsation exchange between the central high-speed jet (6') and the hot-gas shroud jet (5') is minimised, for which purpose the high-speed jet (6') is accelerated in the injector device (1) in a nozzle system with a Laval nozzle to a speed of 300 to 850 m/s and the hot gas (5) is accelerated by means of an annular-gap nozzle (4) of the injector device (1) to approximately the same high speed and wherein the hot gas (5) has a temperature of 300 to 1800° C when it enters the injector device (1).

2. Method according to claim 1, **characterised in that** the pulsation exchange between the central high-speed jet (6') and hot-gas shroud jet (5') takes place isokinetically.

3. Method according to claim 1, **characterised in that** the hot gas (5) is provided by an external reaction of a fuel (8, 8) with an oxidiser and/or by recirculation of hot gases from the metallurgical unit.

4. Method according to claim 1 or 3, **characterised in that** pre-heated oxidiser with an oxygen content of 10 to 100 volume % is used for producing the hot gas.

5. Method according to claim 4, **characterised in that** pre-heated oxidiser with an oxygen content of 21 volume % is used for producing the hot gas.

6. Method according to claim 1 or 4, **characterised in that** the pre-heating of the oxidiser is integrated in the cooling system of the injector device (1) and/or is an essential component thereof.

7. Method according to claim 1, 3, 4 or 6, **characterised in that** the setting of the hot gas temperature at the entry into the injector device (1) is carried out by way of power regulation of the hot-gas producer (20) and/or by way of admetering liquid water (19) to the hot gas prior to acceleration thereof.

8. Method according to one or more of claims 1 to 7, **characterised in that** the oxygen content of the gases (6) containing oxygen is 10 to 100 volume %.

9. Method according to claim 8, **characterised in that** the oxygen content of the gases (6) containing oxygen is preferably greater than 95 volume %.

10. Method according to one or more of claims 1 to 8, **characterised in that** particulate solids and/or fluids (8) are on occasion fed to the central oxygen jet (6), wherein the feed of these substances is carried out centrally and in the same direction by means of an additive injector (15), which is arranged coaxially within the oxygen injector (10), prior to termination of the process of acceleration of the oxygen jet.

11. Method according to claim 10, **characterised in that** the particulate solids (8) are carbon, alkaline metals and/or alkaline earth metals and the fluids (8') respectively contain carbon in a high concentration greater than 30 weight %.

12. Method according to claim 11, **characterised in that** the particulate solids (8) include coal dust or coke dust.

13. Method according to claim 11, **characterised in that** the particulate solids (8) include limestone, caustic lime or dolomite.

14. Method according to claim 11, **characterised in that** the fluids (8') include earth gas, coke gas, converter gas or heating oil.

15. Method according to one of more of claims 1 to 11, **characterised in that** the oxygen injector (10) is operated in alternation with technical oxygen and air, wherein the changeover from oxygen feed to air feed and back again is carried out by way of a multi-way valve (31) and the oxidiser source or a compressed air mains (22) or a blower (21) is used for the oxygen supply.

16. Method according to one or more of claims 1 to 15, **characterised in that** regulation of the operation of the hot gas producer (20) is carried with λ regulation of the combustion, regulation of the hot gas temperature or regulation of the cooling air exit temperature by the automisation unit (R1).

17. Method according to one or more of claims 1 to 16, **characterised in that** regulation of the operation of the oxygen injector (10) with volume flow or pre-pressure is carried out by the automisation unit (R2).

18. Method according to one or more of claims 1 to 17, **characterised in that** regulation of the operation of the additive injector (15) with mass flow or pre-pressure is carried out by a further automisation unit (R3).

19. Method according to one or more of claims 1 to 18, **characterised in that** more than one injector device (1) is installed at the metallurgical unit.

20. Method according to one or more of claims 1 to 19, **characterised in that** coordination of operation of the automisation units (R1, R2, R3, 1) is carried out by a superordinate central automisation unit (R), which is disposed in data exchange with the process control system (PLS) of the metallurgical unit or is autonomous, wherein data exchange with the corresponding automisation units of further injector devices (1) is carried out.

21. Injector device (1) for pyrometallurgical treatment of metals, metal melts and/or slags in a metallurgical unit or melt vessel, for blowing-on or injection of oxygen-rich gases and optionally substances (8) with carbon content in an electric arc furnace, wherein the injector device (1) accelerates oxygen-rich gases (6) to supersonic speed and in which on occasion the substances (8) with carbon content are admixed as particles to the oxygen-rich gases (6') and from which the high speed jet protected by a surrounding gaseous shroud (V) is used for pyrometallurgical treatment, for carrying out the method according to one or more of the preceding claims, **characterised by** a modular construction of the individual subassemblies, consisting of an oxygen injector (10) with injector inner wall (11) and Laval nozzle (13) for acceleration of the oxygen-rich gases (6), surrounded by a hot-gas stub pipe (2), the clear diameter of which is narrowed to such an extent by an obliquely inwardly extending thickening (7) that the hot-gas stub pipe (2) forms together with the oxygen injector (10) in this region an annular gap nozzle (4) for the passage and acceleration of the hot gas (5), wherein the exit regions of the gases are prolonged by a common hot-gas sleeve (3).

22. Injector device (1) according to claim 20 or 21, **characterised in that** a water injection means (18) is arranged in the inlet region of the hot-gas stub pipe (2).

23. Injector device (1) according to one or more of claims 20 to 22, **characterised in that** an additive injector (15) in the form of an additional coaxial pipe with an outlet opening (16), which is formed as a mouth or nozzle, is arranged within the central oxygen injector (10).

24. Injector device (1) according to claim 23, **characterised in that** the outlet opening (16) of the additive injector (15) is formed from a wear-resistant material and is exchangeable.

25. Injector device (1) according to one or more of claims 20 to 24, **characterised in that** the individual subassemblies of the injector device (1) are mounted on a common subassembly support fixedly arranged in the wall of the metallurgical unit.

## Revendications

1. Procédé pour le traitement pyrométallurgique de métaux, de métaux liquides et/ou de scories dans un agrégat métallurgique, respectivement dans une cuve à fusion, en particulier pour l'insufflation superficielle/interne de gaz riches en oxygène dans un four à arc électrique à l'aide d'un dispositif d'injection (1) qui accélère les gaz contenant de l'oxygène (6) à une vitesse supersonique et à partir duquel ce faisceau à grande vitesse (6'), protégé par une enveloppe gazeuse (V) qui l'entoure complètement, est utilisé pour le traitement pyrométallurgique, **caractérisé en ce que** l'enveloppe gazeuse est un gaz chaud (5) qui est acheminé au faisceau central à grande vitesse (6') de telle sorte que l'on minimise la vitesse relative et l'échange d'impulsions entre le faisceau central à grande vitesse (6') et le faisceau (5') constituant l'enveloppe de gaz chaud, si bien que le faisceau à grande vitesse (6') dans le dispositif d'injection (1) est accéléré dans un système de buses avec une buse de Laval à une vitesse de 300 à 850 m/s et le gaz chaud (5) est accéléré au moyen d'une buse du dispositif d'injection (1) à fente annulaire (4) à une vitesse approximativement aussi élevée, le gaz chaud (5) présentant à son entrée dans le dispositif d'injection (1) une température de 300 à 1800 °C.

2. Procédé selon la revendication 1, **caractérisé en ce que** l'échange d'impulsions entre le faisceau central à grande vitesse (6') et le faisceau constituant l'enveloppe de gaz chaud (5') a lieu par voie isocinétique.

3. Procédé selon la revendication 1, **caractérisé en ce que** le gaz chaud (5) est fourni via une réaction externe d'un combustible (8, 8) avec un agent d'oxydation et/ou par recirculation de gaz chauds issus de l'agrégat métallurgique.

4. Procédé selon la revendication 1 ou 3, **caractérisé en ce que**, pour obtenir le gaz chaud, on utilise un agent d'oxydation préchauffé possédant une teneur en oxygène de 10 à 100 % en volume.

5. Procédé selon la revendication 4, **caractérisé en ce que**, pour obtenir le gaz chaud, on utilise un agent d'oxydation préchauffé possédant une teneur en oxygène de 21 % en volume.

6. Procédé selon la revendication 1 ou 4, **caractérisé en ce que** le préchauffage de l'agent d'oxydation est intégré dans le système de refroidissement du dispositif d'injection (1) et/ou représente un constituant essentiel dudit système.

7. Procédé selon la revendication 1, 3, 4 ou 6, **caractérisé en ce que** le réglage de la température du gaz chaud à l'entrée dans le dispositif d'injection (1) a lieu via un réglage de puissance du générateur de gaz chaud (20) et/ou via l'addition dosée d'eau liquide (19) au gaz chaud avant l'accélération de ce dernier.

8. Procédé selon une ou plusieurs des revendications 1 à 7, **caractérisé en ce que** la teneur en oxygène des gaz (6) contenant de l'oxygène s'élève de 10 à 100 % en volume.

9. Procédé selon la revendication 8, **caractérisé en ce que** la teneur en oxygène des gaz (6) contenant de l'oxygène s'élève de préférence à plus de 95 % en volume.

10. Procédé selon une ou plusieurs des revendications 1 à 8, **caractérisé en ce qu'**on achemine au faisceau d'oxygène central (6) le cas échéant des substances solides particulaires et/ou des substances fluides (8), l'acheminement de ces substances ayant lieu au moyen d'un dispositif d'injection d'additifs (15) disposé en position coaxiale à l'intérieur du dispositif d'injection d'oxygène (10), en position centrale, dans la même direction et avant le terme du processus d'accélération du faisceau d'oxygène (6).

11. Procédé selon la revendication 10, **caractérisé en ce que** les substances solides particulaires (8) contiennent du carbone, des métaux alcalins et/ou alcalino-terreux et les substances fluides (8') contiennent du carbone, respectivement en une concentration élevée supérieure à 30 % en poids.

12. Procédé selon la revendication 11, **caractérisé en ce que** les substances solides particulaires (8) contiennent du charbon ou de la poussière de charbon.

13. Procédé selon la revendication 11, **caractérisé en ce que** les substances solides particulaires (8) contiennent du calcaire, de la chaux vive ou de la dolomite.

14. Procédé selon la revendication 11, **caractérisé en ce que** les substances fluides (8') contiennent du gaz naturel, du gaz de coke, du gaz de convertisseur, du mazout.

15. Procédé selon une ou plusieurs des revendications 1 à 11, **caractérisé en ce que** le dispositif d'injection d'oxygène (10) est entraîné en alternance avec de l'oxygène technique et avec de l'air, la commutation de l'alimentation en oxygène à l'alimentation en air et vice versa a lieu via une soupape multivoie (31), et pour l'alimentation en air, on utilise la source de l'agent d'oxydation ou un réseau d'air comprimé (22) ou un ventilateur (21).

16. Procédé selon une ou plusieurs des revendications 1 à 15, **caractérisé en ce que** le réglage de l'entraînement du générateur de gaz chaud (20) a lieu avec un réglage λ de la combustion, un réglage de la température du gaz chaud, un réglage de la température de sortie de l'air de refroidissement, via l'unité d'automatisation (R1).

17. Procédé selon une ou plusieurs des revendications 1 à 16, **caractérisé en ce que** le réglage de l'entraînement du dispositif d'injection d'oxygène (10) a lieu avec un courant volumique, une pression d'admission, via l'unité d'automatisation (R2).

18. Procédé selon une ou plusieurs des revendications 1 à 17, **caractérisé en ce que** le réglage de l'entraînement du dispositif d'injection d'additifs (15) a lieu avec du courant massique, une pression d'admission, via une unité d'automatisation supplémentaire (R3).

19. Procédé selon une ou plusieurs des revendications 1 à 18, **caractérisé en ce qu'**on monte contre l'agrégat métallurgique plus d'un dispositif d'injection (1).

20. Procédé selon une ou plusieurs des revendications 1 à 19, **caractérisé en ce que** la coordination de l'entraînement des unités d'automatisation (R1, R2, R3, 1) a lieu via une unité d'automatisation centrale maître (R) qui échange des données avec le superviseur de processus (PLS) de l'agrégat métallurgique ou qui est autarcique, un échange de données ayant lieu avec les sous-unités d'automatisation correspondantes des dispositifs d'injection supplémentaires (1).

21. Dispositif d'injection (1) pour le traitement pyrométallurgique de métaux, de métaux liquides et/ou de scories dans un agrégat métallurgique ou dans une cuve à fusion pour l'insufflation superficielle/interne de gaz (6) riches en oxygène et/ou de substances carbonées (8) dans un four à arc électrique, dans lequel le dispositif d'injection (1) soumet les gaz (6) riches en oxygène à une accélération à une vitesse supersonique et dans lequel on ajoute par mélange le cas échéant aux gaz (6') riches en oxygène, les substances carbonées (8) sous la forme de particules, et à partir duquel on utilise le faisceau à grande vitesse, protégé par une enveloppe gazeuse qui l'entoure, pour le traitement pyrométallurgique, pour la mise en oeuvre du procédé selon l'une quelconque des revendications précédentes, **caractérisé par** une structure modulaire des modules de construction individuels constitués par un dispositif d'injection d'oxygène (10) comprenant une paroi interne d'injecteur (11) et une buse de Laval (13) pour l'accélération des gaz (6) riches en oxygène, entouré par une tubulure pour les gaz chauds (2) dont le diamètre interne est rétréci par un épaississement (7) s'étendant en inclinaison vers l'intérieur, à un point tel que la tubulure pour les gaz chauds (2) forme avec le dispositif d'injection d'oxygène (10) dans cette zone une buse à fente annulaire (4) pour le passage et l'accélération du gaz chaud (5), les zones de sortie des gaz étant prolongées par un manchon commun pour les gaz chauds (3).

22. Dispositif d'injection (1) selon la revendication 20 ou 21, **caractérisé en ce qu'**une buse d'introduction d'eau (18) est disposée dans la zone d'entrée de la tubulure pour les gaz chauds (2).

23. Dispositif d'injection (1) selon une ou plusieurs des revendications 20 à 22, **caractérisé en ce que**, à l'intérieur du dispositif d'injection d'oxygène central (10), est disposé un dispositif d'injection d'additifs (15) sous la forme d'un tube coaxial supplémentaire possédant une ouverture de sortie (16) qui est réalisée sous la forme d'un orifice ou d'une buse.

24. Dispositif d'injection (1) selon la revendication 23, **caractérisé en ce que** l'ouverture de sortie (16) du dispositif d'injection d'additifs (15) est réalisée à partir d'une matière résistant à l'usure et qui peut être remplacée.

25. Dispositif d'injection (1) selon une ou plusieurs des revendications 20 à 24, **caractérisé en ce que** les modules de construction individuels du dispositif d'injection (1) sont montés sur un support commun de modules de construction, disposé à demeure dans la paroi de l'agrégat métallurgique.
